# EUROPÄISCHE PATENTSCHRIFT

(11) **EP 3 642 456 B1**
(45) Veröffentlichungstag und Bekanntmachung des Hinweises auf die Patenterteilung: **04.08.2021**
(21) Anmeldenummer: 18734153.2
(22) Anmeldetag: 19.06.2018
(51) Int. Cl.: F01D 15/06, B25F 5/00, F02C 6/06, F02C 7/18

(54) **DRUCKLUFTGETRIEBENES WERKZEUG**
COMPRESSED AIR-DRIVEN TOOL
OUTIL PNEUMATIQUE

(30) Priorität: 22.06.2017 CH 8152017; 14.06.2018 CH 7582018
(43) Veröffentlichungstag der Anmeldung: 29.04.2020
(73) Patentinhaber: Otto Suhner AG, 5200 Brugg (CH)
(72) Erfinder: WIEDEMEIER, Stefan, 5200 Brugg Aargau (CH); INEICHEN, Stefan, 5702 Niederlenz Aargau (CH)
(74) Vertreter: Gachnang, Hans Rudolf
(86) Internationale Anmeldenummer: PCT/EP2018/066213
(87) Internationale Veröffentlichungsnummer: WO 2018/234289

(56) Entgegenhaltungen:
- EP-A1- 1 343 952
- EP-A1- 2 589 745
- US-A1- 2012 318 544

## Beschreibung

Gegenstand der Erfindung ist ein druckluftgetriebenes Werkzeug gemäss Oberbegriff des Patentanspruchs 1.

Druckluftgetriebene Werkzeuge finden vorwiegend Einsatz in der metallverarbeitenden Industrie und zeichnen sich durch ein verhältnismässig geringes Gewicht in Bezug auf die Leistung aus, da kein Antriebsmotor, wie ein Elektromotor, innerhalb des Werkzeugs angeordnet ist und insbesondere bei handbetätigten Werkzeugen zur raschen Ermüdung der Betätigungs- oder der Bedienungsperson führt.

Die Drehzahlregelung bei solchen Werkzeugen ist aufwendig und wurde bisher mittels Fliehkraftreglern vorgenommen, die im Leerlauf die Luftzufuhr drosseln und bei Belastung wieder freigeben. Die heute geforderte Zuverlässigkeit und die Konstanthaltung der Drehzahl bei wechselnden Arbeitsvorgängen und Bedingungen kann nicht erreicht werden.

Aus der US 6,908,277 ist weiter ein Drehzahlregler für einen rotierenden Druckluftmotor beschrieben. Bei diesem Drehzahlregler ist auf der Welle des Werkzeugs ein Generator angeordnet, welcher in Abhängigkeit der Drehzahl der Welle eine entsprechend variable Ausgangsspannung erzeugt. Mit der jeweiligen Ausgangsspannung wird ein elektromagnetisches Stellglied gespeist, um das Einlassventil für Druckluft am Werkzeug in direkter Abhängigkeit von der Ausgangsspannung zu steuern. Bei dieser bekannten Ausführung wird das Fliehkraftelement durch ein elektromagnetisches angesteuertes Stellglied ersetzt. Das heisst, es wird für die Betätigung des elektromagnetischen Stellglieds innerhalb des Werkzeugs eine Spannung erzeugt, so dass dieses ohne eine externe Stromquelle auskommt.

Nachteilig an dieser Drehzahlregelung ist die Tatsache, dass die Regelung der Arbeitsdrehzahl von der von der Motorwelle erzeugten variablen Spannung abhängt. Dies bedeutet, dass die Aufrechterhaltung der Drehzahl des Werkzeugs, insbesondere bei veränderlicher Last, nicht oder nur ungenügend möglich ist.

Aus der EP 2 449 999 ist ein fluidbetriebener medizinischer, insbesondere dentaler Handgriff bekannt. Die Bestimmung des Ist-Werts der Drehzahl erfolgt über die Amplitude der gleichgerichteten Generatorspannung (analog) und das Stellglied ist als Proportionalventil oder als Drossel ausgebildet. Für Fluidantriebe im medizinischen Bereich, bei denen sehr geringe Drehmomente erzeugt werden müssen, genügt dieses Vorgehen, jedoch nicht für Werkzeuge der metallverarbeitenden Industrie.

Aus der US 2001/0088921 ist weiter ein pneumatisch betriebenes Handwerkzeug bekannt, bei welchem über eine interne Batterie und einem Mikrocomputer ein elektromagnetisches Ventil direkt im Zuluftkanal steuerbar ist. Die Batterie wird durch einen Generator im Abluftstrom gespeist, dessen erzeugte Energie nicht für die Betätigung eines elektromagnetischen Ventils genügt. Aus der EP 2 727 552 ist ein weiteres medizinisches Handstück bekannt, bei dem zur Steuerung eine elektrische Energiequelle wie eine Konstantstromquelle und/oder eine Konstantspannungsquelle, d.h. eine externe Stromquelle eingesetzt ist. Ein Stromanschluss, der durch das anmeldungsgemässe Werkzeug vermieden werden soll, ist hier unabdingbar.

Eine Aufgabe der vorliegenden Erfindung ist die Schaffung eines druckluftgetriebenen Werkzeugs, bei dem die eingestellte Drehzahl auch unter Einfluss von Störgrössen wie der Last auf einem einstellbaren Wert exakt einstellbar ist.

Eine weitere Aufgabe der Erfindung besteht darin, dass bei Stromausfall durch Versagen des internen Generators die Drehzahl sofort auf einen für das Werkzeug und das Werkstück minimalen unschädlichen Wert abfällt.

Gelöst wird diese Aufgabe durch ein druckluftgetriebenes Werkzeug gemäss den Merkmalen des Patentanspruchs 1. Vorteilhafte Ausgestaltungen des Werkzeugs sind in den abhängigen Ansprüchen umschrieben.

Durch einen Spannungsregler kann unabhängig von der momentanen und zugleich an die durchzuführenden Arbeiten angepasste variablen Drehzahl der Welle eine konstante Ausgangsspannung zur Speisung eines Mikrocontrollers erzeugt werden. Folglich kann dadurch in Abhängigkeit der gemessenen Drehzahl des Motors unabhängig von der Last am Werkzeug das elektromagnetische Steuerglied zur Steuerung des Luftdurchlasses am Einlassventil erfolgen und die gewählte Drehzahl bei variabler Last aufrechterhalten werden. Die intern erzeugte Spannung dient nur zur Speisung des Microcontrollers und des Einlassventils.

Anhand zweier illustrierter Ausführungsbeispiele wird die Erfindung näher umschrieben. Es zeigen:
- Figur 1a: ein Funktionsdiagram, des mit Druckluft betriebenen Werkzeugs,
- Figur 1b: eine schematische Darstellung eines druckluftbetriebenen Werkzeugs, im Beispiel ein Winkelschleifer,
- Figur 2a: einen Vertikalschnitt durch eine erste Ausführungsform des Werkzeugs unmittelbar nach der Beaufschlagung mit Druckluft,
- Figur 2b: das Werkzeug gemäss Figur 2a während der Anlaufphase,
- Figur 2c: das Werkzeug während des Betriebs bei höchster Drehzahl oder grösstem Drehmoment,
- Figur 2d: eine alternative Ausführung der Drehzahlerfassung bei unveränderter Luftzuführung im Werkzeug gemäss Figur 2a,
- Figur 3a: einen Vertikalschnitt durch eine zweite Ausführungsform des Werkzeugs unmittelbar nach der Beaufschlagung mit Druckluft,
- Figur 3b: das Werkzeug gemäss Figur 3a während der Anlaufphase,
- Figur 3c: das Werkzeug während des Betriebs bei höchster Drehzahl oder grösstem Drehmoment,
- Figur 3d: eine alternative Ausführung der Drehzahlerfassung bei unveränderter Luftzuführung im Werkzeug gemäss Figur 3a,
- Figur 4: eine grafische Darstellung des Drehzahlverlaufs an der Welle mit und ohne Drehzahlregelung während des Startvorgangs,
- Figur 5: eine grafische Darstellung der Spannung am Generator entlang der Zeitachse während des Startvorgangs,
- Figur 6: eine grafische Darstellung des Einschaltzustands des Elektromagnets bezüglich der Zeitachse während des Startvorgangs,
- Figur 7: eine grafische Darstellung des Öffnungsquerschnitts des Hauptventils während des Startvorgangs,
- Figur 8: eine grafische Darstellung des Drehmomentverlaufs während des Startvorgangs,
- Figur 9: eine grafische Darstellung des Drehzahlverlaufs an der Welle mit und ohne Drehzahlregelung im Lastfall,
- Figur 10: eine grafische Darstellung der Spannung am Generator entlang der Zeitachse im Lastfall,
- Figur 11: eine grafische Darstellung des Einschaltzustands des Elektromagnets bezüglich der Zeitachse im Lastfall,
- Figur 12: eine grafische Darstellung des Öffnungsquerschnitts des Hauptventils im Lastfall,
- Figur 13: eine grafische Darstellung des Drehmomentverlaufs im Lastfall.

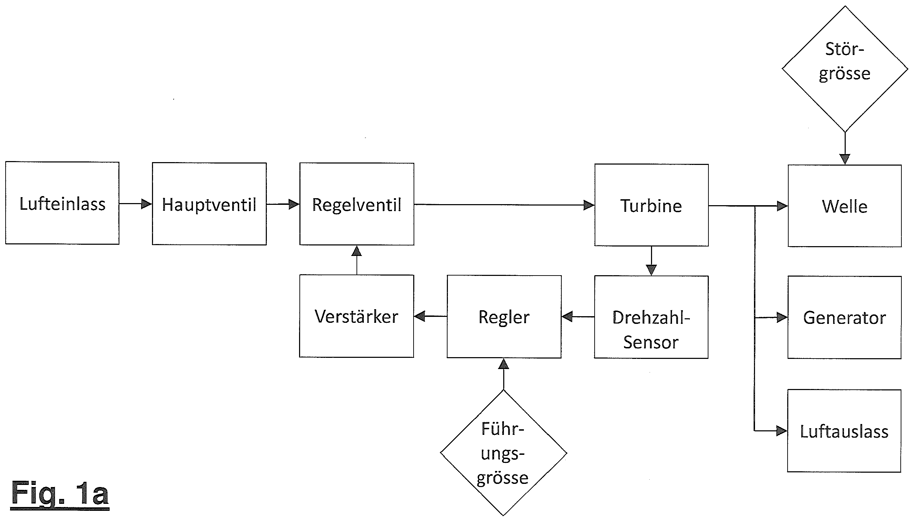

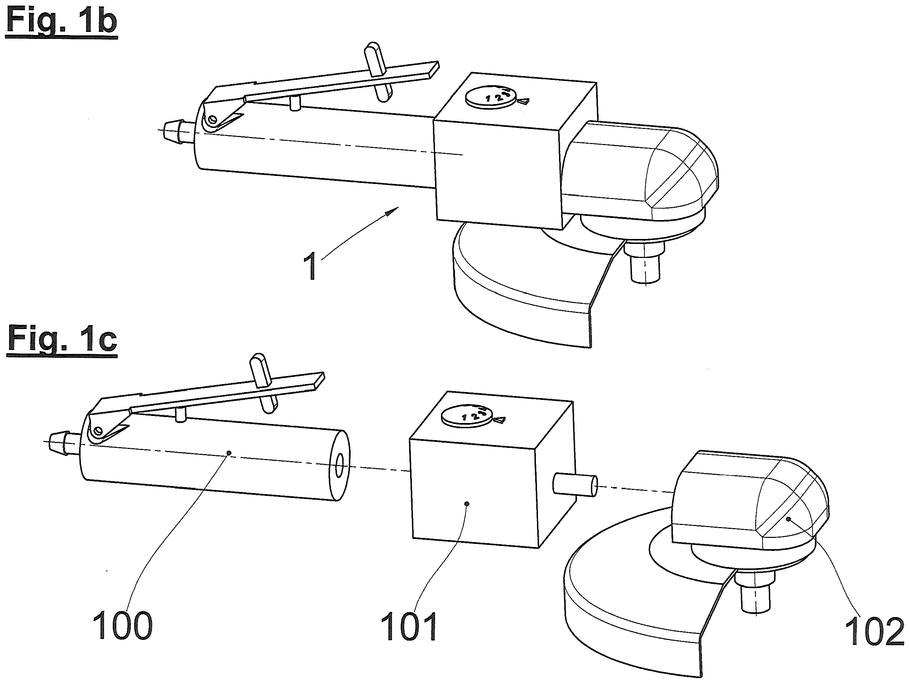

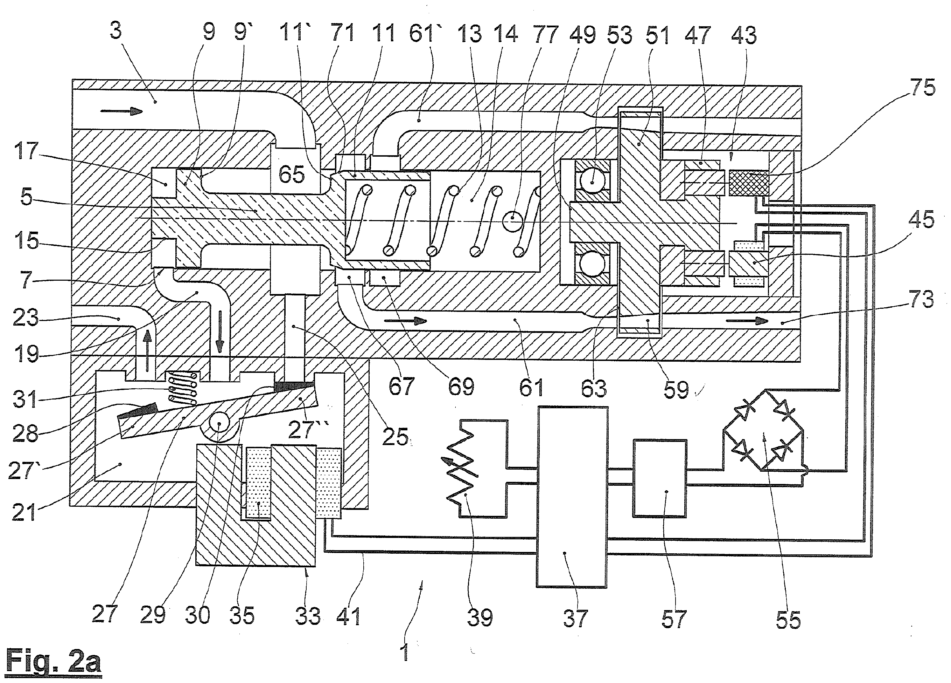

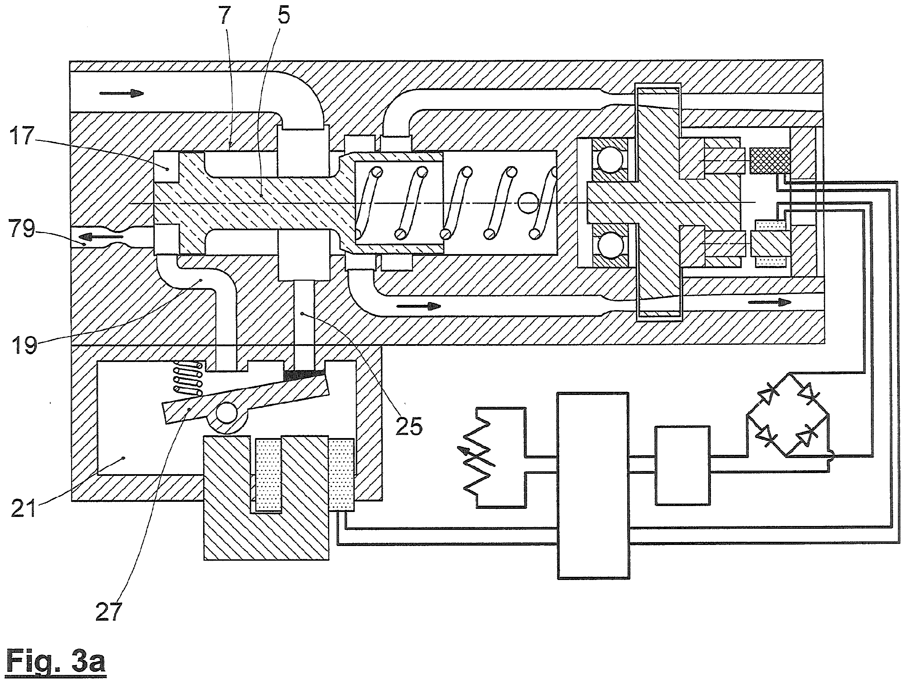

Die Figur 1a stellt ein Funktionsdiagram eines erfindungsgemässen druckluftgetriebenen Werkzeugs dar, wie eines beispielsweise in den Figuren 1b und 1c dargestellt ist. Figur 1b zeigt einen Winkelschleifer als druckluftbetriebenes Werkzeug. Der Winkelschleifer ist in Figur 1c explosionsartig in seine Elemente aufgeteilt, nämlich in das erste Gehäuseteil 100 mit dem Lufteinlass und dem Betätigungshebel, das zweite Gehäuseteil 101 mit der Elektronik und dem Werkzeugkopf 102, an welchem eine Schleifscheibe (nicht dargestellt) befestigbar ist. An die Stelle des Winkelschleifkopfs kann selbstverständlich auch eine Abtriebsspindel in gerader Ausführung montiert sein. Zur Veranschaulichung des Funktionsdiagramms werden in den Figuren 2a bis 2c und 3a bis 3c zwei Ausführungsbeispiele näher beschrieben.

Mit Bezugszeichen 1 ist schematisch das Antriebsgehäuse mit den Antriebselementen des druckluftgetriebenen Werkzeugs schematisch dargestellt. Ein möglicher Aufbau des Werkzeugs ist in Figur 1b dargestellt. Unterschiedliche Werkzeugtypen können mit solchen Antriebselementen verbunden sein. Das erste Gehäuseteil 101 umfasst einen Lufteinlasskanal 3, durch den Luft von einer nicht dargestellten Druckluftquelle zugeführt wird, der zu einem Hauptventil 5 führt. Dieses ist in einer Bohrung 7, die einen Hubraum bildet, axial geführt. Das Hauptventil 5 umfasst einen kreisringförmigen ersten Dichtbereich 9 und, axial beabstandet dazu, einen zweiten kolbenartigen Dichtbereich 11, wobei beide Dichtbereiche 9 und 11 an der Wand der Bohrung 7 dichtend geführt sind. Die Dichtelemente an den Dichtbereichen 9,11 sind der besseren Übersichtlichkeit halber nicht dargestellt und zudem aus dem Stand der Technik von pneumatischen Ventilen bekannt. Der Lufteinlasskanal 3 mündet in die Bohrung 7 zwischen den beiden einander gegenüberliegenden Schultern 9' und 11' der beiden Dichtbereiche 9,11. Vorzugsweise ist die Bohrung 7 im Bereich der Einmündung des Lufteinlasskanals 3 als umlaufende Ringnut 65 radial erweitert, um den eintretenden Luftstrom über den gesamten Umfang der Bohrung 7 zu verteilen. An den zweiten Dichtbereich 11 liegt axial wirkend eine Schraubenfeder 13 mit deren ersten Ende an. Deren zweites Ende ist am rechten Ende der Bohrung 7 im Fussraum 14 abgestützt. Durch die Schraubenfeder 13 wird das Hauptventil 5 gegen das erste Ende des Kopfraums 17 der Bohrung (links in den Figuren) angepresst, so lange durch den Lufteinlass 3 kein oder nur ein äusserst geringer Zufluss an Druckluft erfolgt. Der auf der linken Seite in den Figuren liegende Dichtbereich 9 liegt, beabstandet durch einen scheibenförmigen Endbereich 15, zum hinteren Ende des Kopfraums 17 der Bohrung 7 gehalten. Aus dem beabstandeten Bereich, das heisst dem ringförmigen Kopfraum 17, führt ein erster Entlüftungskanal 19 zu einem Ventilraum 21. Ein zweiter Entlüftungskanal 23 führt vom Ventilraum 21 ins Freie, das heisst aus dem Gehäuse 1 hinaus.

Die Bohrung 7 für das Hauptventil 5 ist weiter über einen Druckkanal 25 ebenfalls mit dem Ventilraum 21 verbunden. Der Druckkanal 25 mündet in die Ringnut 65.

Im Ventilraum 21 ist ein Regelventil 27 als Steuerglied, beispielsweise ein um eine Achse 29 schwenkbarer hebelartiger Ventilkörper mit zwei an die Enden der Druckkanäle 23, 25 abwechslungsweise anzuliegen bestimmten Dichtelementen 28, 30 angeordnet. Das Regelventil 27 umfasst ein erstes Ende 27' mit dem Dichtelement 28 und ein zweites Ende 27" mit dem Dichtelement 30. Je nach Schwenklage des Regelventils 27 kann mit dem ersten Ende 27' der zweite Entlüftungskanal 23 verschlossen werden oder mit dem zweiten Ende 27" der Druckkanal 25. Ein Federelement 31, welches von einer am ersten Ende 27' angreifenden Schraubenfeder oder einem Tellerfederpaket gebildet sein kann, drückt das zweite Ende 27" nach oben und schliesst den Druckkanal 25 gegenüber dem Ventilraum 21 ab. Das Regelventil 27 kann durch einen Elektromagnet 33 gegen die Kraft des Federelements 31 um eine Achse 29 verschwenkt werden, so dass der Druckkanal 25 offengelegt und der zweite Entlüftungskanal 23 verschlossen wird. Die Wicklung 35 des Elektromagnets 33 wird von einer Stromquelle über einem Mikrocontroller 37 gespeist. Am Mikrocontroller 37 ist beispielsweise ein Potentiometer 39 angeschlossen, mit welchem die Spannung an der Wicklung 35 über die Leitungen 41 der Magnet 33 aktivierbar ist. Bei stromlosen Magnet 33 wird der Druckkanal 25 zum Ventilraum 21 verschlossen gehalten, so dass kein Druckaufbau im Kopfraum 17 erfolgt und folglich das Hauptventil 5 die für den Antrieb notwendige Zufuhr von Luft zu einem Turbinenrad 51 verhindert.

Der Aufbau einer Betriebsspannung für den Mikrocontroller 37 erfolgt im Zuluftstrom über einen Generator 43, dessen Wicklungen 45 beispielsweise am Gehäuse 1 befestigt sein können und mit einem Rotor 47 zusammenwirken. Der Rotor 47 ist auf der Welle 49 des Turbinenrads 51 angeordnet. Das Turbinenrad 51 wird von mindestens einem Lager 53 am Gehäuse 1 getragen. Vom Generator 43 wird die dort erzeugte Wechselspannung einem Gleichrichter 55 zugeleitet. Der Gleichrichter 55 ist weiter verbunden mit einem Spannungsregler 57, welcher den Mikrocontroller 37 mit einer konstanten Gleichstromspannung speist, die unabhängig ist von der momentanen Drehzahl der Welle 49 des Turbinenrads 51. Das Turbinenrad 51 kann, wie in den Figuren dargestellt, direkt auf der Abtriebswelle 49 des Werkzeugs angeordnet sein oder in einem Bypass am Zuführkanal 61 für Druckluft zum Turbinenrad 51 (keine Abbildung).

Das Turbinenrad 51 mit seinen nicht im Detail, sondern rein schematisch dargestellten Schaufeln 59 wird durch den Zuluftstrom, welcher durch den Zuführkanal 61 geführt wird, angetrieben. Der Zuführkanal 61 ist mit der Bohrung 7 im Gehäuse 1 verbunden. Die Mündung des Zuführkanals 61 in die Bohrung 7 liegt in einem ersten ringförmigen Einstich 67 in der Bohrung 7. Nebst dem in den Figuren von unten in die Bohrung 7 mündenden Zuführkanal 61 kann ein weiterer Zuführkanal 61' in den Schaufelraum 63, in welchem die Schaufeln 59 umlaufen, geführt sein. Der zweite Zuführkanal 61' mündet axial versetzt in den zweiten ringförmigen Einstich 69 in die Bohrung 7.

Die beiden ringförmigen Einstiche 67 und 69 sind im drucklosen Bereich, das heisst ohne Druckluftzufuhr oder mit Druckluftzufuhr, der eine kolbenförmige Gestalt aufweist, abgedeckt.

Im ersten Ausführungsbeispiel gemäss den Figuren 2a bis 2d ist am zylindrischen Mantel des zweiten Dichtungsbereichs 11 stirnseitig eine Anphasung bzw. ein konischer Abschnitt 71 ausgebildet. An dieser Stelle wird dadurch ein schmaler ringförmiger Durchlass für die durch den Lufteinlasskanal 3 der Bohrung 7 zugeführte Druckluft geschaffen. Diese einströmende Luft gelangt über den ersten Zuführkanal 61 zu den Schaufeln 59 im Schaufelraum 63 und von dort nach dem Passieren der Schaufeln 59 durch einen Abluftkanal 73 in die Atmosphäre. Die durch den ersten Zuführkanal 61 dem Turbinenrad 51 zugeführte Luftstrom bewirkt, dass das Turbinenrad 51 in Drehung versetzt wird und dadurch der Generator 43 in Abhängigkeit von der Drehzahl des Turbinenrads 51 eine Spannung erzeugt, die im Gleichrichter 55 gleichgerichtet und im Spannungsregler 57 unabhängig von der Drehzahl des Turbinenrads 51 konstant gehalten wird. Mit dieser konstant gehaltenen Spannung wird der Mikrocontroller 37 gespeist. Mit dessen Ausgangsspannung kann mit dem Potentiometer 39 oder einem anderen entsprechenden elektronischen Element der Elektromagnet 33 angesteuert werden, um die Zuluftmenge zum Hauptventil 5 zu steuern.

Nachfolgend wird die Funktionsweise der elektronischen Steuerung des Druckluftwerkzeugs gemäss dem ersten Ausführungsbeispiel beschrieben.

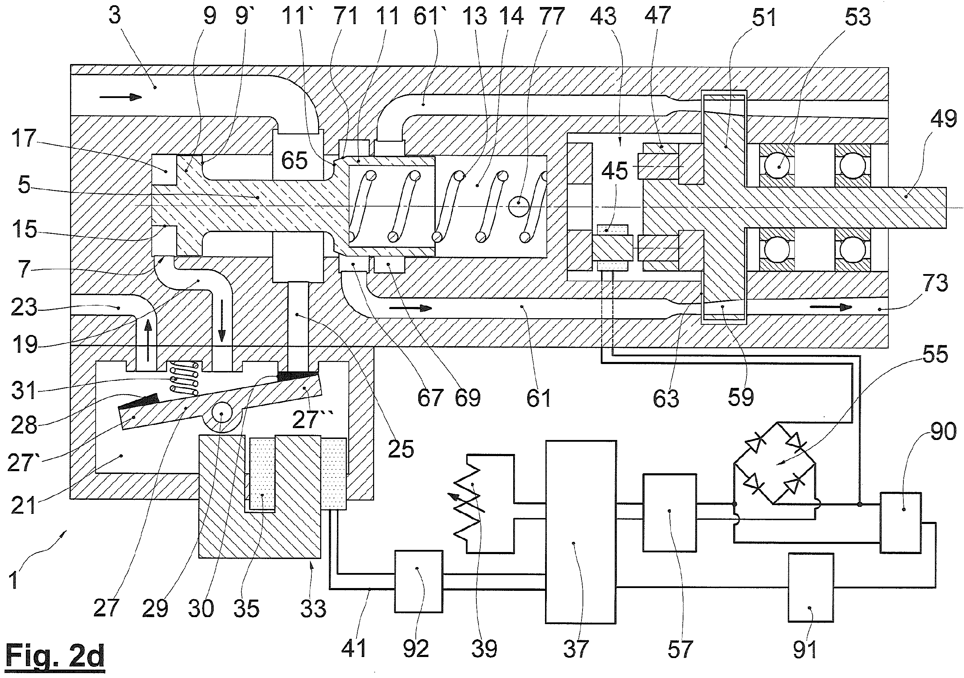

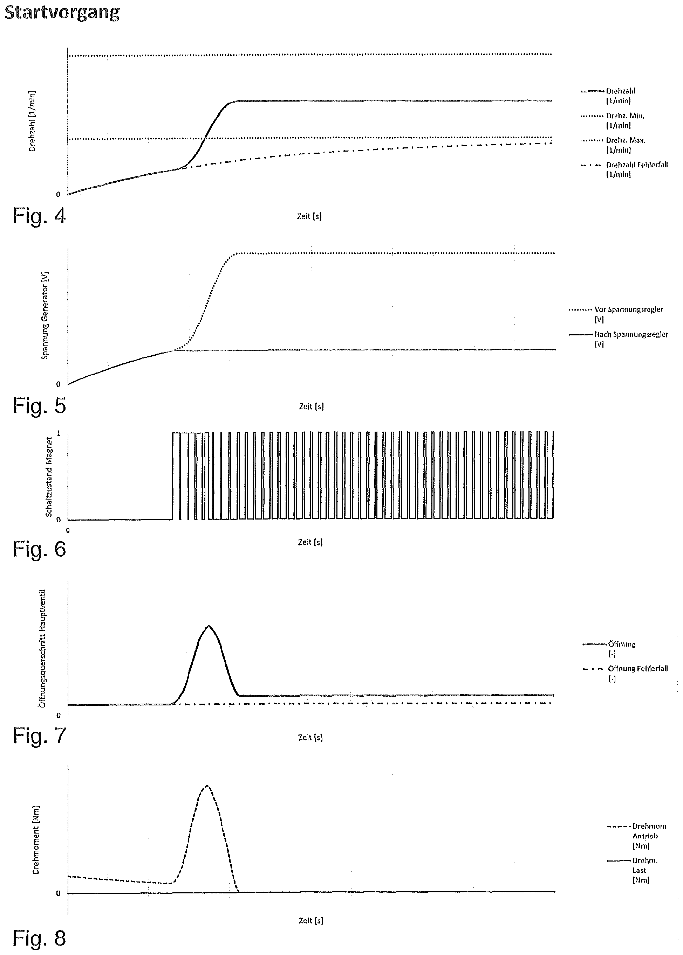

Vor Beginn der Arbeitsaufnahme mit dem Werkzeug, das heisst bevor durch den Einlasskanal 3 dem Turbinenrad 51 Druckluft zugeführt wird, beispielsweise ab dem Betriebsnetz, befindet sich das Hauptventil 5 in der in den Figuren 2a und 2d dargestellten Position, nämlich durch die Feder 13 beaufschlagt in Anschlag mit dem linken Ende in der Bohrung 7. Sobald Druckluft durch den Lufteinlass 3 eingeführt wird, kann eine minimale Menge durch den ringförmigen Spalt gebildet durch den konischen Abschnitt 71 zum ersten Zuführkanal 61 fliessen und das Turbinenrad 51 in Drehung versetzen (Startphase Fig. 4-8). Diese Drehbewegung des Turbinenrads 51 genügt, um die notwendige minimale Spannung am Mikrocontroller 37 anzulegen. Dabei verbleibt das Hauptventil 5 in der Ausgangsposition gemäss Figuren 2a und 2d, auch dann, wenn der Druck zwischen dem ersten und dem zweiten Dichtbereich 9, 11 den Netzdruck erreicht hat. Die Position des Hauptventils 5 verharrt folglich unabhängig vom Druck im Ringraum 65, da die projizierten Querschnittsflächen 9',11' der beiden Dichtbereiche 9,11 gleich gross sind und der Kopfraum 17 mit der Atmosphäre verbunden ist.

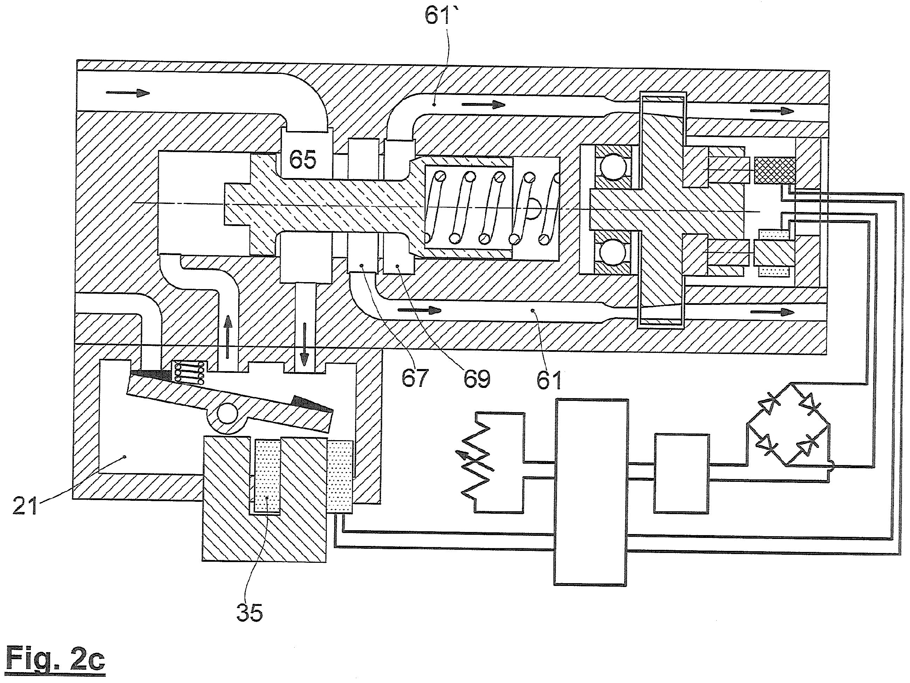

Der Raum 14 in der Bohrung 7, in welchem die Schraubenfeder 13 angeordnet ist, wird durch eine mit der Atmosphäre verbundene Entlüftungsöffnung 77 drucklos bzw. auf Atmosphärendruck gehalten. Der ringförmige Kopfraum 17 hinter dem ersten Dichtungsbereich 9 ist in diesem Zeitpunkt über dem ersten Entlüftungskanal 19 dem Ventilraum 21 und den zweiten Entlüftungskanal 23 ebenfalls mit der Atmosphäre verbunden und drucklos. Der Druckkanal 25, welcher von der Bohrung 7 in den Ventilraum 21 führt, ist durch das Regelventil 27 bzw. dessen Dichtelement 30 am zweiten Ende 27" verschlossen. Sobald die für den Betrieb des Mikrocontrollers 37 notwendige Betriebsspannung V₁ erreicht ist, kann durch Ein- und Ausschalten des Elektromagneten 33 die mit dem Potentiometer 39 voreingestellte Drehzahl erlangt werden. Die Drehzahl wird durch einen geeigneten Drehzahlsensor 75 an der Welle 49 gemessen. Das Ein- und Ausschalten des Elektromagneten 33 bewirkt abwechslungsweise das Öffnen und Schliessen des Druckkanals 25 und des zweiten Entlüftungskanals 23 und folglich ein Oszillieren des Regelventils 27. Die dadurch bewirkte Beaufschlagung des Hauptventils 5 mit Druckluft wird nachfolgend beschrieben. Wird nun eine Last an der Welle 49 angelegt, so fällt anfänglich die Drehzahl. Um dies ausgleichen zu können, d.h. das Drehmoment zu erhöhen, um die gewünschte Drehzahl beibehalten zu können, wird mit dem Mikrocontroller 37 durch entsprechende Aktivierung des Elektromagneten 33 das Regelventil 27 im Uhrzeigersinn geschwenkt, wodurch Druckluft aus dem Lufteinlass 3 über die Ringnut 65 durch den Druckkanal 25 in den Ventilraum 21 strömen und weiter von dort durch den ersten Entlüftungskanal 19 in den ringförmigen Raum 17 hinter dem ersten Dichtbereich 9 fliessen kann (Fig. 2a). Dadurch verschiebt sich das stirnseitig mit Druckluft beaufschlagte Hauptventil 5 gegen die Kraft der Schraubenfeder 13 nach rechts. Nun kann die Druckluft aus der Bohrung 7 nicht nur durch den ersten Zuführkanal 61 zum Turbinenrad 51 gelangen, sondern gemäss Figur 2c wird auch der zweite Ringkanal 69 mit Druckluft beaufschlagt, durch welchen die Druckluft in den zweiten Zuführkanal 61' fliesst. Das Turbinenrad 51 wird nun durch eine grössere Menge Druckluft beaufschlagt, wodurch sich das Drehmoment auf der Welle 49 erhöht. In der Praxis wird dies dadurch erreicht, dass das Regelventil 27 eine Drehschwingung ausführt und dadurch die dem rückwärtigen Ende des ersten Dichtbereichs 9 zugeführte Druckluft an das verlangte Drehmoment angleicht. Dies kann mehrmals pro Sekunde der Fall sein (vergl. Fig. 6).

Die zweite Ausgestaltung des druckgetriebenen Werkzeugs gemäss den Figuren 3a-3d unterscheidet sich vom ersten Ausführungsbeispiel dadurch, dass der ringförmige Kopfraum 17 am rückwärtigen Ende des ersten Dichtbereichs 9 unter Zwischenschaltung einer Drossel 79 mit der Atmosphäre verbunden ist. Das Regelventil 27 ist bei dieser Ausgestaltung folglich nur einseitig wirksam und kann den Druckkanal 25 zum Ventilraum 21 hin öffnen oder schliessen. Beim Öffnen des Druckkanals 25 fliesst von der Bohrung 7 Druckluft in den Ventilraum 21 und von dort durch den ersten Entlüftungskanal 19 in den ringförmigen Kopfraum 17. Ein Teil der in den Ringraum 17 geführten Druckluft kann gedrosselt entweichen, so dass die auf das Hauptventil 5 wirkende Kraft kleiner ist als im ersten Ausführungsbeispiel.
In der Praxis ist es sinnvoll, für die zweite Ausgestaltungsvariante ein grösseres Regelventil zu verwenden, um den ständigen Abluftstrom, hervorgerufen durch die Drossel, ausgleichen zu können.

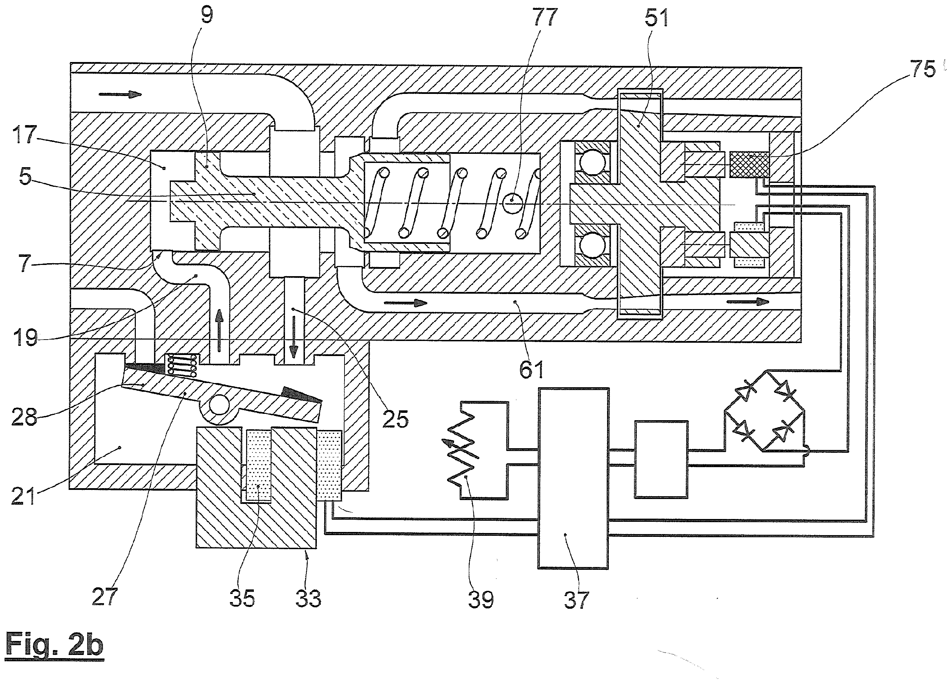

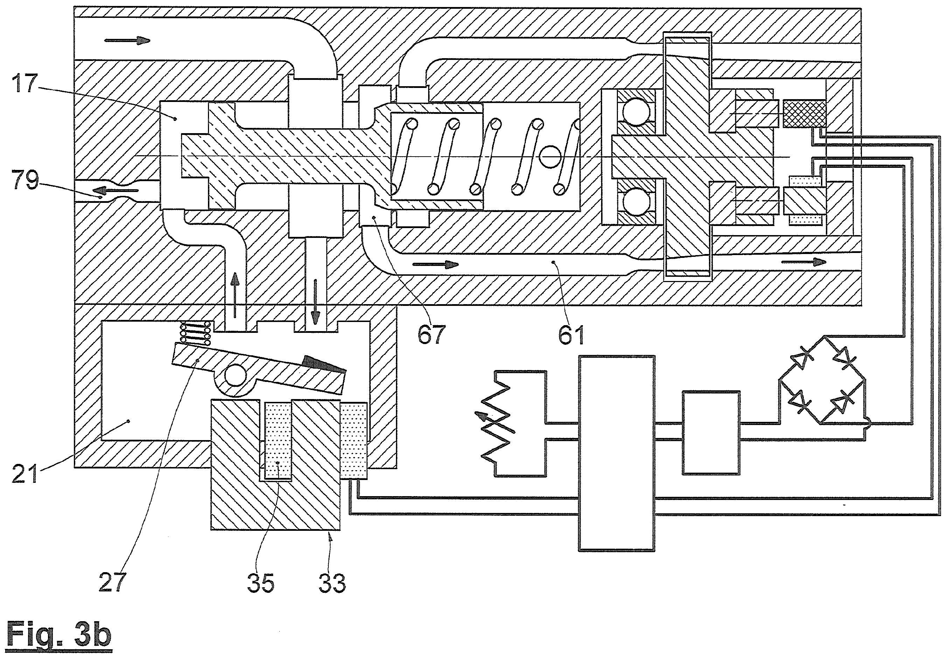

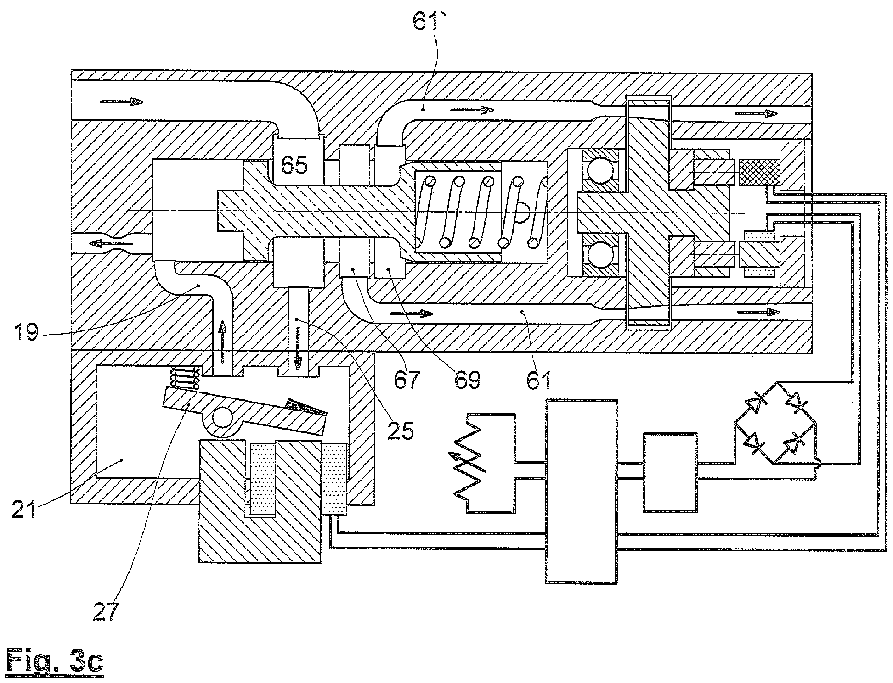

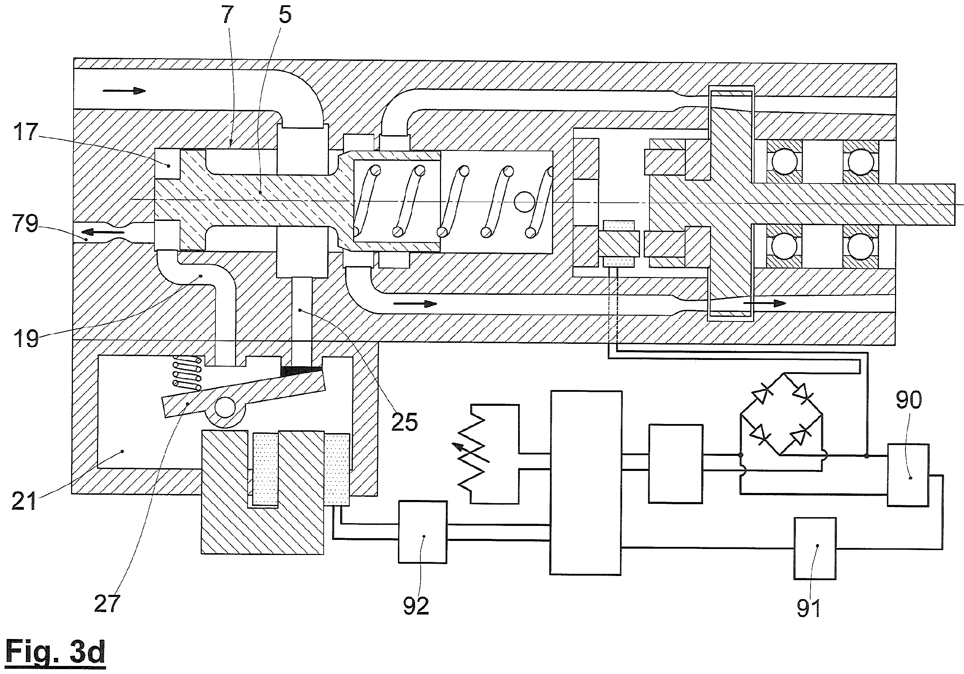

In den grafischen Darstellungen in Figur 4 sind, in gebrochenen Linien dargestellt, der Drehzahlverlauf ohne elektronische Steuerung, das heisst während des Startvorgangs und auch bei Ausfall des Generators 43, und der Verlauf der Drehzahl auf der Zeitachse mit ausgezogener Linie dargestellt. Deutlich ersichtlich ist, dass in der Startphase die Drehzahl während des Aufbaus des Netzdrucks der Druck in der Bohrung 7 zwischen den beiden Dichtbereichen 9 und 11 ansteigend verläuft und dann, z.B. nach 1,5 Sekunden, wenn die Spannung des Generators 43 beispielsweise 5 Volt erreicht hat, die Drehzahl steiler nach oben ansteigt, weil das Regelventil 27 durch den Elektromagnet 33 im Uhrzeigersinn geschwenkt wird und dadurch der in der Bohrung 7 aufgebaute Druck (Netzdruck) durch den Ventilraum 21 in den ersten Entlüftungskanal 19 und von dort in den ringförmigen Kopfraum 17 gelangen kann. Die Druckerhöhung im Kopfraum 17 bewirkt eine Verschiebung des Hauptventils 5 nach rechts gegen die Kraft der Feder 13. Durch die Verschiebung des Hauptventils 5 gelangt aus der Bohrung 7 Druckluft zuerst durch den ersten Zuführkanal 61 zum Turbinenrad 51 und - falls diese zusätzliche Luftzufuhr zum Turbinenrad 51 für das Erreichen der eingestellten Drehzahl nicht genügt - weiter durch den zweiten Zuführkanal 61' zum Turbinenrad 51. Sobald die eingestellte Drehzahl, im Beispiel 5000 Umdrehungen pro Minute, erreicht ist, wird über den Mikrocontroller 37 das Regelventil 27 geschlossen, so dass auf der Rückseite des Hauptventils 5, das heisst auf dessen linken Seite im Kopfraum 17 in den Figuren 2 und 3, der Druck abfällt und so das Hauptventil 5 sich durch die Kraft der Feder 13 wieder nach links bewegt, und zwar so weit, damit die eingestellte Drehzahl aufrechterhalten wird, also auf einer horizontalen Linie verläuft. Die eingestellte Drehzahl liegt zwischen der minimalen Drehzahl (untere punktierte Linie, beispielsweise bei 30000 Umdrehungen pro Minute und der oberen punktierten Linie, beispielsweise bei 75000 Umdrehungen pro Minute), die nicht überschritten werden darf.

In der Darstellung gemäss Figur 5, welche das Mass des Öffnungsquerschnitts am Hauptventil 5 über die Zeit s zeigt, ist ersichtlich, dass unabhängig von der Beaufschlagung der Bohrung 7 mit Druckluft stets ein kleiner Luftstrom von der Bohrung 7 zum ersten Einstich 67 und von dort durch den ersten Zuführkanal 61 zum Turbinenrad 51 gelangen und dieses in Drehung versetzen kann und folglich der Generator 43 eine Spannung erzeugt, welche durch den Spannungsregler 57 konstant gehalten wird. Durch das Öffnen des Regelventils 27 kann mehr Druckluft durch den Druckkanal 25 in den ersten Entlüftungskanal 19 fliessen und bewirkt dort einen Druckaufbau im ringförmigen Kopfraum 17. Dadurch wird das Hauptventil 5 rasch nach rechts gegen die Kraft der Feder 13 gedrückt, was zu einer Vergrösserung des Öffnungsquerschnitts, das heisst einen vergrösserten Durchgang von der Bohrung 7 mindestens in den ersten Einstich 67 und von dort zum Turbinenrad 51 bewirkt. Der Öffnungsquerschnitt wird danach durch den Mikrocontroller 37, der das Regelventil 27 anhand der an der Welle 49 gemessenen Drehzahl regelt, sofort wieder verkleinert, indem die Zufuhr von Druckluft in dem ringförmigen Kopfraum 17 reduziert wird. Bis der Öffnungsquerschnitt ein Mass erreicht hat, bei dem die Drehzahl der Welle auf dem eingestellten Wert, z.B. 50000 Umdrehungen pro Minute liegt.
In der Figur 5 ist der Verlauf der Spannung am Generator 43 dargestellt. Die ausgezogene Linie zeigt, dass zu Beginn nach dem Einschalten der Druckluft die Spannung sukzessive ansteigt und beispielsweise nach ca. 1,5 Sekunden bei Erreichen der am Spannungsregler 57 eingestellten Spannung von 5 Volt konstant verläuft. Würde die Spannung durch höhere Drehzahl an der Welle 49 nicht vom Spannungsregler 57 konstant gehalten, würde die Spannung mit der Drehzahl beispielsweise bis auf gegen 25 Volt ansteigen und dadurch den Mikrocontroller 37 beschädigen oder zumindest ausser Betrieb setzen.

In der Figur 6 wird der Schaltzustand des Regelventils 27 grafisch dargestellt. Zu Beginn in der Startphase, wenn das Regelventil 21 die Zufuhr von Druckluft zum Hauptventil 5 geschlossen hält, weil der Elektromagnet 33 vom Generator 43 noch spannungsfrei ist, verbleibt dieses in der Ausgangsstellung. Sobald, wie in Figur 5 dargestellt, die Spannung am Generator 43 beispielsweise 5 Volt erreicht hat, schaltet das Regelventil 27 auf die Offenstellung, weil es durch den Elektromagnet 33 im Uhrzeigersinn geschwenkt wird. Würde das Regelventil 27 dauernd in Offenstellung gehalten, so würde, wie in Figur 1 dargestellt, die Drehzahl über die gewünschte bzw. eingestellte Drehzahl hinaus und allenfalls über die maximale Drehzahl ansteigen. Durch oszillierendes Verhalten des Regelventils 27 gemäss Figur 6 kann die eingestellte Drehzahl aufrechterhalten werden.

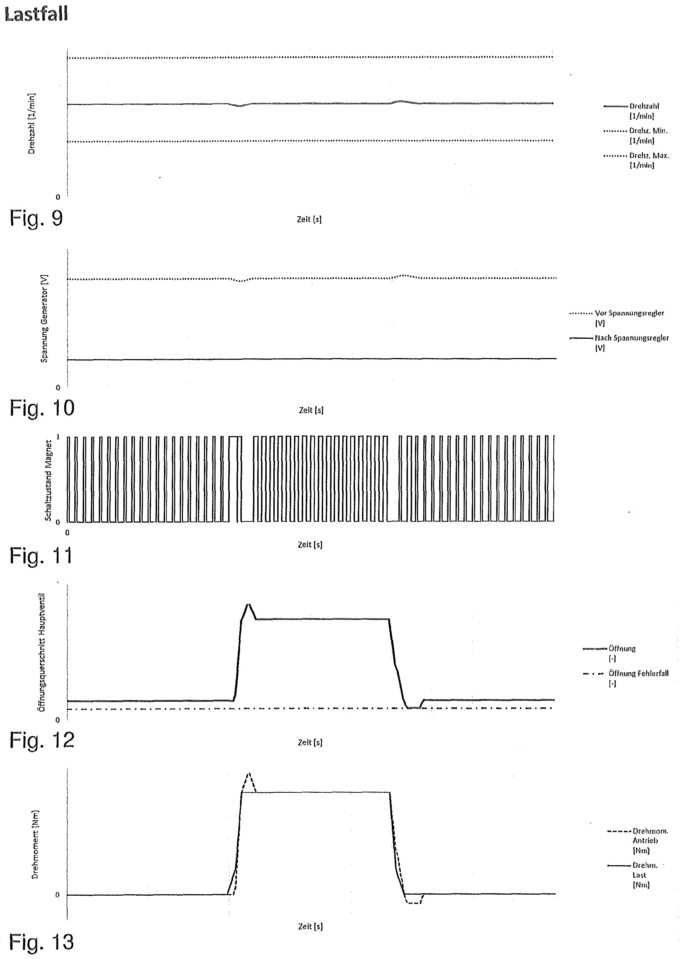

Die Figuren 9 bis 13 zeigen den Verlauf der Drehzahl der Welle 49, die Gleichspannung nach dem Spannungsregler 57 und den Schaltzustand des Elektromagneten 33, wo in Figur 11 deutlich ersichtlich ist, dass bei Abfall der Drehzahl an der Welle 49, beispielsweise durch eine entsprechende angreifende Last, durch das Regelventil 27 die Druckluftzufuhr in den Kopfraum 17 des Hauptventils 5 länger geöffnet ist als bei unveränderter Drehzahl, um den Drehzahlabfall zu kompensieren und danach das Öffnen und Schliessen der Druckzufuhr in einem geänderten Rhythmus erfolgt.
In Figur 12 ist an der Stelle der Belastung der Welle 49 dargestellt, wie der Öffnungsquerschnitt zu mindestens einem der Zuführkanäle 61, 61' kurzfristig vergrössert und dann über eine bestimmte Zeit, solange ein höheres Drehmoment erforderlich ist, auf diesem erhöhten Querschnitt gehalten wird, bis die Last entfällt und die Drehzahl bzw. das Drehmoment abgesenkt werden kann. In der Figur 13 ist entsprechend der Drehmomentverlauf ersichtlich.

Die Erfassung der Drehzahl erfolgt gemäss den Figuren 2a, 2b und 3a, 3b durch den Sensor 75, welcher als separat angeordnetes Teil als Hallsensor ausgebildet ist. In der Ausführung gemäss den Figuren 2d und 3d erfolgt die Drehzahlmessung anhand des Wechselstrom-Signals des Generators 43, indem die aufsteigenden Flanken des Wechselstrom-Signals detektiert und aus der Zeitdifferenz die Drehzahl errechnet wird.

## Patentansprüche

1. Verfahren zur Regelung der Drehzahl der Abtriebswelle (49) an einem mit Druckluft angetriebenen Werkzeug, wobei mit einem von der Druckluft angetriebenen Generator (43) im Werkzeug eine Wechsel-Spannung erzeugt wird, mit der ein elektromagnetisches Regelglied (27) aktivierbar ist, mit welchem die Luftmenge für den Antrieb eines Turbinenrads (51) auf der Abtriebswelle (49) regelbar ist,
**dadurch gekennzeichnet,**
**dass** die Wechsel-Spannung in einem Gleichrichter (55) in eine Gleichspannung umgewandelt wird,
**dass** die Gleich-Spannung durch einen Spannungsregler (57) unabhängig von der Drehzahl der Abtriebswelle (49) konstant gehalten wird,
**dass** mit der konstanten Gleich-Spannung ein Mikrocontroller (37) gespeist wird,
**dass** mit einem Drehzahlsensor (75) die momentane Drehzahl der Abtriebswelle (49) erfasst wird und
**dass** der Mikrocontroller (37) mit dem elektromagnetisch angetriebenen Regelventil (27) die dem Turbinenrad (51) zugeführte Luftmenge regelt und die eingestellte vorgegebene Drehzahl der Welle (49) konstant hält.

2. Verfahren nach Anspruch 1, **dadurch gekennzeichnet, dass** mit der vom Regelventil (27) geregelten Luftmenge ein Hauptventil (5), das in einer Bohrung (7) im Gehäuse (1) des Werkzeugs verschiebbar eingesetzt ist, der Luftzufluss zum Turbinenrad (51) geregelt wird, indem beim Verschieben des Hauptventils (5) ein oder mehrere Zuführkanäle (61,61') für die Druckluft ganz oder teilweise freilegt werden, wodurch die Luftmenge am Turbinenrad (51) bei einer Erhöhung der Last an der Antriebswelle (49) vergrössert wird und die vorgegebene Drehzahl aufrechterhalten wird.

3. Druckluftgetriebenes Werkzeug mit einem Antriebsgehäuse (1), umfassend ein Turbinenrad (51) für den Antrieb der Abtriebswelle (49), einen Lufteinlasskanal (3) für Druckluft und einen Abluftkanal (73), einen im Zuluftstrom für die Druckluft eingesetzten Generator (43) für die Erzeugung einer elektrischen Wechsel-Spannung und einen Gleichrichter (55) für den Betrieb eines Mikrocontrollers (37),
**gekennzeichnet durch** einen Spannungsregler zur Erzeugung einer von der Drehzahl der Welle (49) unabhängigen konstanten Ausgangsspannung für den Betrieb des Mikrocontrollers (37) für die Steuerung eines Stellglieds (27) für die Betätigung eines Hauptventils (5) anhand der Messdaten eines Drehzahlsensors (75) an der Welle (49).

4. Druckluftgetriebenes Werkzeug nach Anspruch 3, **dadurch gekennzeichnet, dass** der Generator (43) auf der Abtriebswelle (49) oder auf einer von der Welle (49) unabhängigen zweiten Welle in einem Bypass angeordnet ist.

5. Druckluftgetriebenes Werkzeug nach Anspruch 4, **dadurch gekennzeichnet, dass** im Antriebsgehäuse (1) eine das Hauptventil (5) aufnehmende Bohrung (7) ausgebildet ist, dass die Bohrung (7) durch einen Lufteinlass (3) mit einer Druckluftquelle verbindbar ausgebildet ist, und dass mit einem Druckkanal (25) und mit einem ersten Entlüftungskanal (19) die Bohrung (7) mit einem Ventilraum (21) verbunden ist, dass im Ventilraum (21) ein elektromagnetisch ansteuerbares Regelventil (27) zum Öffnen und zum Schliessen des Druckkanals (25) oder zum Schliessen eines zweiten Entlüftungskanals (23) eingesetzt ist, wobei das Regelventil (27) in Abhängigkeit der Drehzahl der Welle (49), gemessen mit dem Drehzahlsensor (75), regelbar ist.

6. Druckluftgetriebenes Werkzeug nach Anspruch 5, **dadurch gekennzeichnet, dass** das Hauptventil (5) zwischen einem Kopfraum (17) und einem druckfreien Raum (14) in der Bohrung (7) verschiebbar geführt ist.

7. Druckluftgetriebenes Werkzeug nach den Ansprüchen 5 oder 6, **dadurch gekennzeichnet, dass** der Ventilraum (21) durch den ersten Entlüftungskanal (19) mit dem bodenseitigen Kopfraum (17) am Boden des Hauptventils (5) verbunden ist.

8. Druckluftgetriebenes Werkzeug nach einem der Ansprüche 5 bis 7, **dadurch gekennzeichnet, dass** der Ventilraum (21) durch den zweiten Entlüftungskanal (23) mit der Umgebung verbunden ist.

9. Druckluftgetriebenes Werkzeug nach einem der Ansprüche 6 bis 8, **dadurch gekennzeichnet, dass** das Hauptventil (5) einen ersten (9) und beabstandet dazu einen zweiten flanschförmigen Dichtbereich (11) umfasst, deren Mantelflächen dichtend an der Wand der Bohrung (7) gleitbar anliegen und dass in einem druckfreiem Raum (14) in der Bohrung (7) eine Schraubenfeder (13) zwischen dem Hauptventil (5) und einer die Bohrung (7) stirnseitig begrenzenden Wand eingesetzt ist.

10. Druckluftgetriebenes Werkzeug nach Anspruch 8 oder 9, **dadurch gekennzeichnet, dass** der erste Dichtbereich (9) das Hauptventil (5) kopfseitig zur Bohrung (7) dichtend führt, dass der zweite Dichtbereich (11) derart angeordnet ist, dass die erste Einmündung in die Bohrung (7) eines ersten Zuführkanals (61) teilweise und die Einmündung eines zweiten Zuführkanals (61') ganz verschliesst, wenn das Hauptventil (5) kopf- bzw. druckraumseitig drucklos liegt.

11. Druckluftgetriebenes Werkzeug nach Anspruch 10, **dadurch gekennzeichnet, dass** der Lufteinlasskanal (3) und/oder der erste (61) und/oder der zweite Zuführkanal (61') je in eine Ringnut (65) bzw. einen ersten Einstich (67) oder einen zweiten Einstich (69) am Hauptventil (5) einmünden.

12. Druckluftgetriebenes Werkzeug nach einem der Ansprüche 10 oder 11, **dadurch gekennzeichnet, dass** die Zuführkanäle (61,61') in einen Schaufelraum (63) eines Turbinenrads (51) münden.

13. Druckluftgetriebenes Werkzeug nach einem der Ansprüche 3 bis 11, **dadurch gekennzeichnet, dass** das Regelventil (27) im Ventilraum (21) derart schwenkbar gelagert ist, dass entweder der Druckkanal (25) oder der zweite Lüftungskanal (23) durch einen mit einem Elektromagnet (33) betätigtes am Regelventil (27) angebrachte Dichtelemente (28,30) verschliessbar sind.

14. Druckluftgetriebenes Werkzeug nach einem der Ansprüche 3-13, **dadurch gekennzeichnet, dass** die Drehzahlmessung durch das Wechselstromsignal errechnet wird, indem die Zeitdifferenz der aufsteigenden Flanken detektiert wird.

## Claims

1. A method for controlling the rotational speed of the output shaft (49) on a tool driven by compressed air,
an AC voltage being generated by a generator (43) driven by the compressed air in the tool, it being possible to use said AC voltage to activate an electromagnetic control member (27), by means of which the amount of air for driving a turbine wheel (51) on the output shaft (49) can be controlled,
**characterized in that**
the AC voltage is converted into a DC voltage in a rectifier (55),
**in that** the DC voltage is kept constant by a voltage controller (57) independently of the rotational speed of the output shaft (49),
**in that** a microcontroller (37) is supplied with the constant DC voltage,
**in that** the current rotational speed of the output shaft (49) is detected by a rotational speed sensor (75), and
**in that** the microcontroller (37) controls the amount of air supplied to the turbine wheel (51), by means of the electromagnetically driven control valve (27), and keeps the set predetermined rotational speed of the shaft (49) constant.

2. The method according to Claim 1, **characterized in that**, by means of the amount of air controlled by the control valve (27) a main valve (5), which is inserted movably in a bore (7) in the housing (1) of the tool, the air supply to the turbine wheel (51) is controlled by one or more supply channels (61, 61') for the compressed air being unblocked entirely or at least in part when the main valve (5) is moved, as a result of which the amount of air at the turbine wheel (51) is increased when the load on the drive shaft (49) is increased and the predetermined rotational speed is maintained.

3. A compressed air-driven tool having a drive housing (1), comprising a turbine wheel (51) for driving the output shaft (49), an air inlet channel (3) for compressed air, an exhaust channel (73), a generator (43) inserted in the supply flow for the compressed air and for generating an electrical AC voltage, and a rectifier (55) for operating a microcontroller (37),
**characterized by** a voltage controller for generating a constant output voltage, which is independent of the rotational speed of the shaft (49) and is for operating the microcontroller (37) for controlling an actuator (27) for actuating a main valve (5) on the basis of the measurement data from a rotational speed sensor (75) on the shaft (49).

4. The compressed air-driven tool according to Claim 3, **characterized in that** the generator (43) is arranged on the output shaft (49) or on a second shaft independent of the shaft (49) in a bypass.

5. The compressed air-driven tool according to Claim 4, **characterized in that** a bore (7) accommodating the main valve (5) is formed in the drive housing (1), **in that** the bore (7) is designed to be connectable to a compressed-air source via an air inlet (3), and **in that** the bore (7) is connected to a valve chamber (21) by a pressure channel (25) and by a first ventilation channel (19), **in that** an electromagnetically actuatable control valve (27) for opening and closing the pressure channel (25) or for closing a second ventilation channel (23) is inserted in the valve chamber (21), it being possible to control the control valve (27) on the basis of the rotational speed of the shaft (49), measured by the rotational speed sensor (75) .

6. The compressed air-driven tool according to Claim 5, **characterized in that** the main valve (5) is guided movably between a head chamber (17) and an unpressurised chamber (14) in the bore (7).

7. The compressed air-driven tool according to Claim 5 or 6, **characterized in that** the valve chamber (21) is connected to the bottom-side head chamber (17) at the bottom of the main valve (5) via the first ventilation channel (19).

8. The compressed air-driven tool according to any of Claims 5 to 7, **characterized in that** the valve chamber (21) is connected to the surroundings via the second ventilation channel (23).

9. The compressed air-driven tool according to any of claims 6 to 8, **characterized in that** the main valve (5) comprises a first sealing region (9) and, spaced apart therefrom, a second flange-shaped sealing region (11), the circumferential surfaces of which sealingly bear slidably against the wall of the bore (7), and **in that** a helical spring (13) is inserted in an unpressurised chamber (14) in the bore (7) between the main valve (5) and a wall defining the bore (7) on the end face.

10. The compressed air-driven tool according to Claim 8 or 9, **characterized in that** the first sealing region (9) sealingly guides the main valve (5) on the head side in relation to the bore (7), **in that** the second sealing region (11) is arranged in such a way that the first opening of a first supply channel (61) into the bore (7) is partially closed and the opening of a second supply channel (61') is completely closed when the main valve (5) is unpressurised on the head side or on the pressure-chamber side.

11. The compressed air-driven tool according to Claim 10, **characterized in that** the air inlet channel (3) and/or the first (61) and/or the second supply channel (61') each open into an annular groove (65) or a first recess (67) or a second recess (69) on the main valve (5).

12. The compressed air-driven tool according to Claim 10 or 11, **characterized in that** the supply channels (61, 61') open into a blade chamber (63) of a turbine wheel (51).

13. The compressed air-driven tool according to any of Claims 3 to 11, **characterized in that** the control valve (27) is pivotally mounted in the valve chamber (21) in such a way that either the pressure channel (25) or the second ventilation channel (23) can be closed by a sealing element (28, 30) mounted on the control valve (27), which is actuated by an electromagnet (33).

14. The compressed air-driven tool according to any of Claims 3-13, **characterized in that** the rotational speed measurement is calculated by the AC signal by detecting the time difference between the rising edges.

## Revendications

1. Procédé de régulation de la vitesse de rotation de l'arbre de sortie (49) sur un outil pneumatique,
dans lequel une tension alternative est produite dans l'outil avec un générateur pneumatique (43), avec laquelle un organe de régulation électromagnétique (27) peut être activé, lequel permet de réguler le volume d'air assurant l'entraînement d'une roue de turbine (51) sur l'arbre de sortie (49),
**caractérisé en ce**
**que** la tension alternative est convertie en tension continue dans un redresseur (55),
**que** la tension continue est maintenue constante par un régulateur de tension (57) indépendamment de la vitesse de rotation de l'arbre de sortie (49),
**qu'**un microcontrôleur (37) est alimenté par la tension continue constante,
**que** la vitesse de rotation momentanée de l'arbre de sortie (49) est détectée par un capteur de vitesse (75) et que le microcontrôleur (37) régule le volume d'air alimentant la roue de turbine (51) avec la vanne de régulation entraînée par voie électromagnétique (27) et maintient constante la vitesse de rotation prédéfinie réglée de l'arbre (49).

2. Procédé selon la revendication 1, **caractérisé en ce qu'**au moyen du volume d'air régulé par la vanne de régulation, une vanne principale (5), qui est placée dans un alésage (7) à l'intérieur du carter (1) de l'outil de façon coulissante, l'afflux d'air vers la roue de turbine (51) est régulé, par une ou plusieurs canaux d'alimentation (61,61') de l'air comprimé étant dégagés au moins en partie ou en totalité lors du coulissement de la vanne principale (5), moyennant quoi le volume d'air sur la roue de turbine (51) est augmenté et la vitesse de rotation prédéfinie est maintenue lors d'une élévation de la charge sur l'arbre d'entraînement (49).

3. Outil pneumatique avec un carter d'entraînement (1), comprenant une roue de turbine (51) pour entraîner l'arbre de sortie (49), un canal d'admission (3) de l'air comprimé et un canal d'évacuation d'air (73), un générateur (43) placé dans le flux de l'air comprimé admis pour produire une tension alternative électrique et un redresseur (55) pour faire fonctionner un microcontrôleur (37), **caractérisé par** un régulateur de tension servant à générer une tension de sortie constante indépendante de la vitesse de rotation de l'arbre (49) pour faire fonctionner le microcontrôleur (37) destiné à commander un organe de régulation (27) actionnant une vanne principale (5) à l'aide des données de mesure d'un capteur de vitesse (75) sur l'arbre (49).

4. Outil pneumatique selon la revendication 3, **caractérisé en ce que** le générateur (43) est disposé sur l'arbre de sortie (49) ou sur un second axe indépendant de l'arbre (49) dans une dérivation.

5. Outil pneumatique selon la revendication 4, **caractérisé en ce qu'**un alésage (7) recevant la vanne principale (5) est constitué dans le carter d'entraînement (1), que l'alésage (7) est conçu de manière à pouvoir être raccordé à une source d'air comprimé par une admission d'air (3) et que l'alésage (7) est relié à un compartiment de vanne (21) par un canal de pression (25) et par un premier canal d'aération (19), qu'une vanne de régulation activable par voie électromagnétique (27) est placée dans le compartiment de vanne (21) pour ouvrir et pour fermer le canal de pression (25) ou pour fermer un second canal d'aération (23), dans lequel la vanne de régulation (27) est réglable en fonction de la vitesse de rotation de l'arbre (49), mesurée avec le capteur de vitesse (75).

6. Outil pneumatique selon la revendication 5, **caractérisé en ce que** la vanne principale (5) est guidée de façon coulissante dans l'alésage (7) entre un espace vide (17) et un espace hors pression (14).

7. Outil pneumatique selon les revendications 5 ou 6, **caractérisé en ce que** le compartiment de vanne (21) est relié à l'espace vide du côté du fond (17) au fond de la vanne principale (5) par le premier canal d'aération (19).

8. Outil pneumatique selon l'une des revendications 5 à 7, **caractérisé en ce que** le compartiment de vanne (21) est relié au milieu ambiant par le second canal d'aération (23) .

9. Outil pneumatique selon l'une des revendications 6 à 8, **caractérisé en ce que** la vanne principale (5) comprend une première zone d'étanchéité en forme de bride (9) et espacée de celle-ci une seconde zone d'étanchéité en forme de bride (11), dont les surfaces enveloppantes reposent sur la paroi de l'alésage (7) de manière étanche de façon coulissante et qu'un ressort hélicoïdal (13) est placé dans un espace hors pression (14) à l'intérieur de l'alésage (7) entre la vanne principale (5) et une paroi limitant l'alésage (7) du côté frontal.

10. Outil pneumatique selon la revendication 8 ou 9, **caractérisé en ce que** la première zone d'étanchéité (9) guide la vanne principale (5) du côté de la tête vers l'alésage (7) de façon étanche, que la seconde zone d'étanchéité (11) est disposée de sorte qu'elle obture en partie la première embouchure dans l'alésage (7) d'un premier canal d'alimentation (61) et totalement l'embouchure d'un second canal d'alimentation(61'), lorsque la vanne principale (5) se trouve hors pression du côté de la tête ou bien du côté de l'espace sous pression.

11. Outil pneumatique selon la revendication 10, **caractérisé en ce que** le canal d'admission d'air (3) et/ou le premier (61) et/ou le second canal d'alimentation (61') débouchent respectivement dans une rainure annulaire (65) ou dans une première encoche (67) ou une seconde encoche (69) sur la vanne principale (5).

12. Outil pneumatique selon l'une des revendications 10 ou 11, **caractérisé en ce que** les canaux d'alimentation (61,61') aboutissent dans un compartiment à aubes (63) d'une roue de turbine (51).

13. Outil pneumatique selon l'une des revendications 3 à 11, **caractérisé en ce que** la vanne de régulation (27) est montée de façon pivotante dans le compartiment de vanne (21) de sorte que soit le canal de pression (25) soit le second canal d'aération (23) peuvent être obturés par un des éléments d'étanchéité (28,30) adaptés à la vanne de régulation (27), qui est actionnée par un électroaimant (33) .

14. Outil pneumatique selon l'une des revendications 3-13, **caractérisé en ce que** la mesure de la vitesse de rotation est calculée par le signal de courant alternatif, tandis que l'écart de temps des fronts montants est détecté.
